# EUROPÄISCHE PATENTSCHRIFT

(11) **EP 2 205 420 B1**
(45) Veröffentlichungstag und Bekanntmachung des Hinweises auf die Patenterteilung: **01.02.2012**
(21) Anmeldenummer: 08804552.1
(22) Anmeldetag: 22.09.2008
(51) Int. Cl.: B29C 45/56

(54) **VERFAHREN ZUM HERSTELLEN LANGGESTRECKTER PROFILE ODER LEISTEN AUS ERSTARRENDEN FORMMASSEN IN EINER FORM UND FORM**
METHOD FOR PRODUCING ELONGATED PROFILES OR STRIPS FROM SOLIDIFIED MOULDING COMPOUNDS IN A MOULD AND MOULD
PROCÉDÉS DE PRODUCTION DE PROFILÉS ALLONGÉS OU DE BAGUETTES DANS UN MOULE À PARTIR DE MATÉRIAUX DE MOULAGE SOLIDIFIABLES, ET MOULE

(30) Priorität: 28.09.2007 AT 15452007
(43) Veröffentlichungstag der Anmeldung: 14.07.2010
(73) Patentinhaber: Dipl. Ing. Gottfried Steiner, Ingenieurbüro Für Kunststofftechnik, 8724 Spielberg (AT)
(72) Erfinder: STEINER, Gottfried, A-8724 Spielberg (AT); KRIVEC, Thomas, A-8740 Zeltweg (AT)
(74) Vertreter: Vinazzer, Edith
(86) Internationale Anmeldenummer: PCT/EP2008/062626
(87) Internationale Veröffentlichungsnummer: WO 2009/043755

(56) Entgegenhaltungen:
- WO-A-2006/045720
- GB-A- 867 703
- JP-A- 7 112 457
- JP-A- 2005 035 196
- US-A- 2 801 444
- US-A- 3 733 157

## Beschreibung

Die Erfindung betrifft ein Verfahren zum Herstellen langgestreckter Profile oder Leisten aus erstarrenden Formmassen in einer Form mit mindestens einem unteren und mindestens einem oberen Formteil, unter kontinuierlichem Einspritzen von Formmasse in eine Kavität, wobei eingespritzte Formmasse unter fortschreitender kontinuierlicher Verlängerung des gebildeten Profils bzw. der gebildeten Leiste durch Relativbewegung von Formkomponenten von der bzw. den Angussstelle(n) weg- und aus der Form heraustransportiert wird, und wobei Formmasse solange eingespritzt wird, bis das Profil die Leiste seine vorgesehene Länge erreicht hat.

Die Erfindung betrifft ferner eine Form zum Herstellen langgestreckter Profile oder Leisten aus erstarrenden Formmassen, mit zumindest einem oberen Formteil und zumindest einem unteren Formteil, wobei an dem einen Formteil zumindest ein Angusseinsatz und an dem anderen ein profilierter Formeinsatz angeordnet ist, welcher die Geometrie des Profils oder der Leiste zumindest weitgehend bestimmt und die Formkavität mitbildet, wobei der profilierte Formeinsatz und der den Angusseinsatz aufweisende Formteil in der Längserstreckung der Formkavität zueinander in Relativbewegung versetzbar sind, derart, dass durch diese Bewegung das Profil bzw. die Leiste inner- und außerhalb der Form in der vorgesehenen Länge herstellbar ist.

Ein Verfahren und eine Vorrichtung der eingangs genannten Art sind aus der WO-A-2006/045720 bekannt. Dabei wird ein zwischen Formkomponenten des oberen und des unteren Formteils gebildetes Formnest mit Formmasse befüllt, nach dem Auffüllen des Formnestes wird unter Fortsetzen des Einspritzens die zuvor eingespritzte Masse unter Ausdehnung des formgebendenden Bereiches und unter Verlängerung des zu bildenden Profils stetig weg und aus der Form heraustransportiert. Charakteristisch für dieses bekannte Verfahren und die bekannte Form sind, dass nach der volumetrischen Füllung des ursprünglichen Formnestes der entstehende Spritzling unmittelbar im Bereich der Anbindung der Angussstelle zur Formkavität kontinuierlich anwächst bzw. kontinuierlich gebildet wird und nicht an der Fließfront wie es beim herkömmlichen Spritzgießen der Fall ist. Während des Einspritzvorganges wird die eingespritzte und langsam erstarrende Masse, die das entstehende Profil bildet, stetig vom Angussbereich wegtransportiert. Vom herkömmlichen Extrusionsverfahren unterscheidet sich dieses Verfahren vor allem dadurch, dass Profile bestimmter Länge erzeugt werden können, deren Geometrie bei weitem nicht so eingeschränkt ist wie beim Extrusionsverfahren.

Aus der US-A-3,992,503 ist ferner ein Verfahren zur Herstellung eines gerippten Rohres aus einem thermoplastischen Material bekannt. Es wird ein Rohrabschnitt durch Spritzgießen in einer Formkavität zwischen zwei Formteilen hergestellt, die derart ausgeführt sind, dass die erwünschte Rippung an der Außenseite des Rohres mitgeformt wird. Nach dem Erstarren eines Rohrstückes wird der äußere Formteil entfernt und das erstellte Rohrstück in Längsrichtung transportiert. Der äußere Formteil wird nun wieder positioniert, um im geschlossenen Zustand eine an das gebildete Rohrstück anschließende Formkavität zur Bildung des nächsten Rohrstückes zur Verfügung zu stellen. Diese Verfahrensschritte werden solange wiederholt bis die erwünschte Länge des Rohres erreicht ist. Ein weiteres, ähnlich arbeitendes Verfahren zur abschnittsweisen Herstellung eines rohrförmigen Körpers ist aus der EP-A-0 018 044 bekannt.

Der Erfindung liegt die Aufgabe zu Grunde, das aus der WO-A-2006/045720 bekannte Verfahren und die von hier bekannte Form weiter zu verbessern, insbesondere um qualitativ besonders hochwertige Profile oder Leisten definierter Länge herstellen zu können.

Was das Verfahren betrifft, wird die gestellte Aufgabe erfindungsgemäß dadurch gelöst, dass zu Beginn des Einspritzens die Formmasse einen in der Austrittsrichtung des zu bildenden Profils bzw. der zu bildenden Leiste geschlossenen Endabschnitt der Formkavität bis hinter die Angussstelle auffüllt, wobei hinter der Angussstelle der Frontabschnitt der Formmasse während der Relativbewegung der Formkomponenten durch den Prozessdruck als freier Frontabschnitt gegenüber dem oberen Formteil positioniert bleibt, wobei die Formkavität aufgefüllt wird, während die Formmasse von der Angussstelle weg- und aus der Form heraustransportiert wird.

Was die Form betrifft wird die gestellte Aufgabe erfindungsgemäß dadurch gelöst, dass der profilierte Formeinsatz eine der Länge des herzustellenden Profils bzw. der herzustellenden Leiste entsprechende Kavität aufweist und gemeinsam mit dem den Angusseinsatz aufweisenden Formteil lediglich zu Beginn und am Ende des Spritzvorganges geschlossene Kavitätsendabschnitte bildet.

Beim erfindungsgemäßen Verfahren und mit der erfindungsgemäßen Vorrichtung wird daher zu Beginn des Spritzvorganges nur ein vorderer Endabschnitt der Kavität befüllt, zum anderen Ende ist die Formkavität vorerst offen. Die während des Spritzprozesses freie Schmelzefront bleibt gegenüber dem oberen Formteil positioniert. Erst gegen Ende des Spritzvorganges wird der rückwärtige Endabschnitt der Kavität befüllt. Durch die freie Schmelzefront lassen sich qualitativ hochwertige Profile oder Leisten herstellen.

Bei einer bevorzugten und besonders vorteilhaften Ausführungsvariante des erfindungsgemäßen Verfahrens wird der freie Frontabschnitt der eingefüllten Formmasse gesondert temperiert. Diese Maßnahme gestattet es, den freien Frontabschnitt auf einer Temperatur zu halten, die ein einwandfreies Fließen der Formmasse von der Angussstelle weg gewährleistet und derart qualitativ besonders hochwertige Profile entstehen lässt.

Dabei kann der freie Frontabschnitt der eingefüllten Formmasse auf eine konstante Weise temperiert werden, oder, was sich besonders vorteilhaft auf die Qualität des Profils bzw. der Leiste auswirken kann, variabel temperiert werden.

Die erfindungsgemäße Form enthält in dem den Angusseinsatz aufweisenden Formteil ein Temperierelement, welches mit der Oberfläche der eingespritzten Formmasse in Kontakt tritt und auf diese Weise für eine konstante oder variable Temperierung des freien Frontabschnittes der eingespritzten Formmasse sorgt.

Das Temperierelement erstreckt sich bevorzugt beidseitig der Angussstelle und ist dabei vor der Angussstelle kühlbar, um den Erstarrungsvorgang des aus der Form austretenden Profils bzw. der aus der Form austretenden Leiste zu unterstützen.

Um mit einer Form Profile oder Leisten definierter unterschiedlicher Längen fertigen zu können, ist es von Vorteil, wenn der profilierte Formeinsatz einen verschiebbar gelagerten, mit einem profilierten Einsatz versehenen Schlitten aufweist, welcher ein- oder mehrteilig ausgeführt ist.

Die Form kann ferner im Austrittsbereich des gebildeten Profils bzw. der gebildeten Leiste eine Nachbehandlungseinheit zur Behandlung, insbesondere Glättung, der freien Oberfläche des aus der Form austretenden Profils bzw. der aus der Form austretenden Leiste aufweisen. Diese Nachbehandlung kann auf unterschiedliche Weise, beispielsweise mit Infrarotstrahlung, mit Ultraschall, durch Beflammen oder durch mechanische Nachbearbeitung durchgeführt werden.

Weitere Merkmale, Vorteile und Einzelheiten der Erfindung werden nun anhand der Zeichnung, welche den prinzipiellen Aufbau und die prinzipielle Funktionsweise der Erfindung darstellt, näher erläutert. Dabei zeigen
Fig. 1 einen Längsschnitt durch eine erfindungsgemäß ausgeführte Form,
Fig. 2 bis 7 Längsschnitte durch die Form gemäß Fig. 1 in unterschiedlichen Stadien während des Einspritzens von Formmasse bzw. während der Herstellung eines Profils bzw. einer Leiste und
Fig. 8 einen Querschnitt entlang der durch die Linie A-A in Fig. 4 gekennzeichneten Schnittebene.

Die Form gemäß der Erfindung weist einen oberen und einen unteren Formteil auf, welche Formteile zum Öffnen und Schließen der Form voneinander weg und aufeinander zu bewegbar sind. Zum oberen Formteil gehört ein Formeinsatz 1, welcher auf nicht gezeigte Weise an einer Aufspannplatte oder dergleichen des oberen Formteils befestigt ist. Durch den Formeinsatz 1 erstreckt sich eine Heißkanaldüse 2, an welche ein Angusseinsatz 3 anschließt, aus welchem die über ein Aggregat 6 zuführbare Formmasse in eine Formkavität 4 austritt, welche noch näher beschrieben wird. Das Aggregat 6 kann ein Aggregat einer Spritzgießmaschine oder Aggregat eines Extruders sein. Der Angusseinsatz 3 und der diesem zugeordnete Endabschnitt der Heißkanaldüse 2 befinden sich in einer mittigen Öffnung 7c eines in einer flachen Ausnehmung 5 des Formeinsatzes 1 positionierten Temperierelementes 7. Das Temperierelement 7 ist bei der gezeigten Ausführung eine in der Ausnehmung 5 dicht eingesetzte, mehrteilig ausgeführte Platte, deren dem unteren Formteil zugewandte ebene Außenseite 7a gemeinsam mit der ebenen Außenseite 3a des Angusseinsatzes 3 die Formkavität 4 mit begrenzt. Das mehrteilige Temperierelement 7 weist vor dem Angusseinsatz einen kühlbaren Teil 7d und hinter dem Angusseinsatz 3 einen beheiz- und kühlbaren Teil 7b auf, welcher durch ein in den Figuren eingezeichnetes Heizelement 9 angedeutet ist. Der Angusseinsatz 3 und der Teil 7d des Temperierelementes 7 sind als kombinierte Extrusionsdrüse mit Kalibrierung ausgeführt, wobei der Angusseinsatz 3 vorzugsweise die Funktion einer Extrusionsdüse und der Teil 7d vorzugsweise die Funktion der Kalibrierung übernimmt.

Wie noch näher beschrieben wird, wird nach dem erfindungsgemäßen Verfahren ein langgestrecktes Profil oder eine Leiste gefertigt, wobei die Formmasse 20 zu Beginn des Einspritzvorganges - bei geschlossener Form - in einen innerhalb der Form gebildeten geschlossenen Endabschnitt 4a der Formkavität 4 eintritt, welcher in einen der Länge des zu bildenden Profils bzw. der zu bildenden Leiste 21 entsprechenden Längsabschnitt 4b übergeht, der sich außerhalb des oberen Formteils bzw. des oberen Formeinsatzes 1 befindet. Der geschlossene Endabschnitt 4a ist vor und zu Beginn des Einspritzvorganges - bei soeben geschlossener Form - knapp vor der Einspritzöffnung des Angusselementes 3 positioniert.

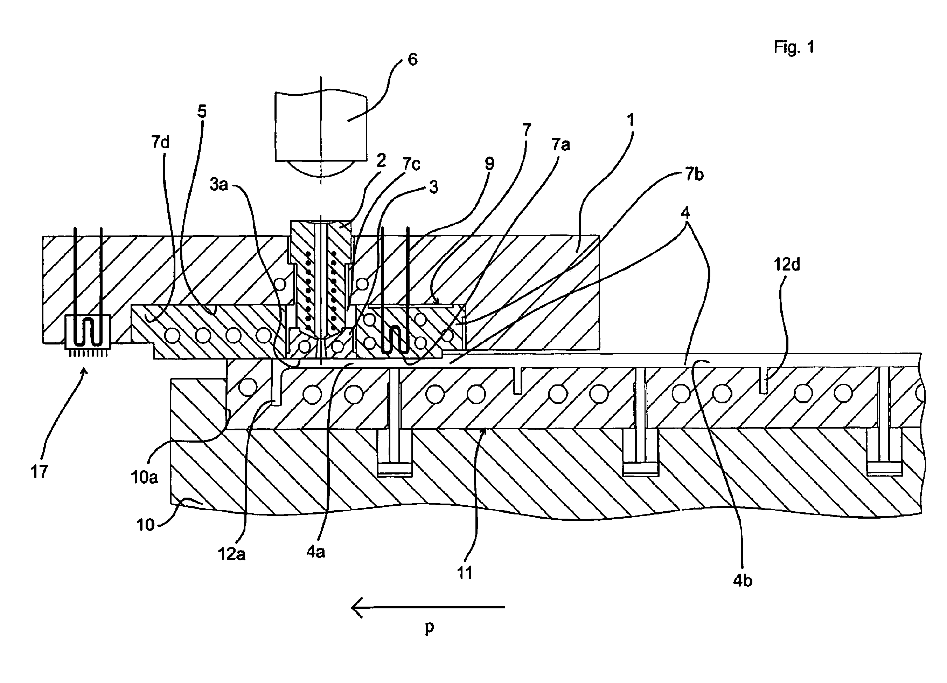

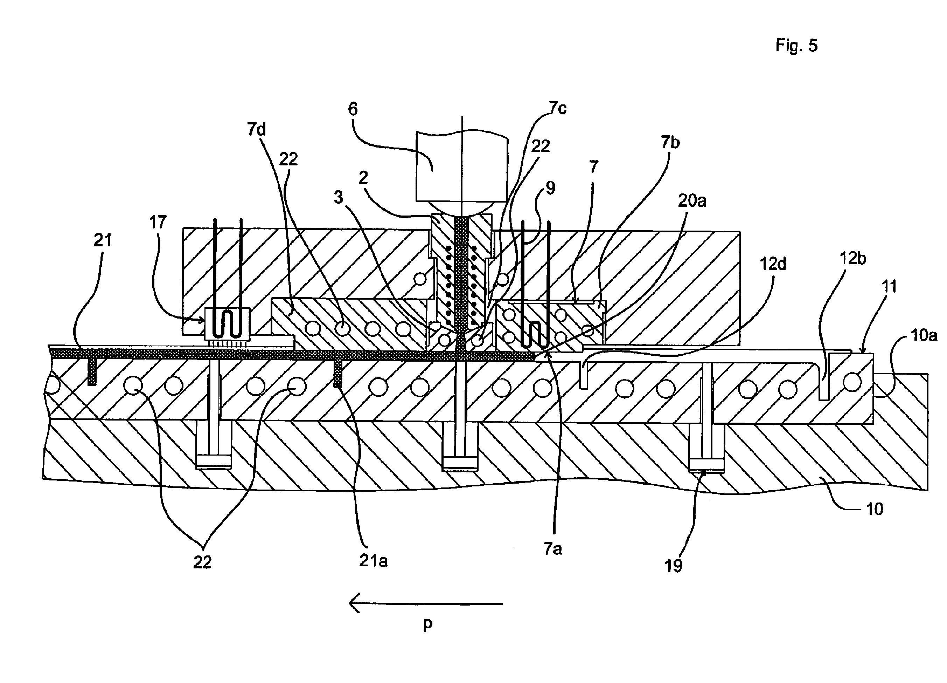

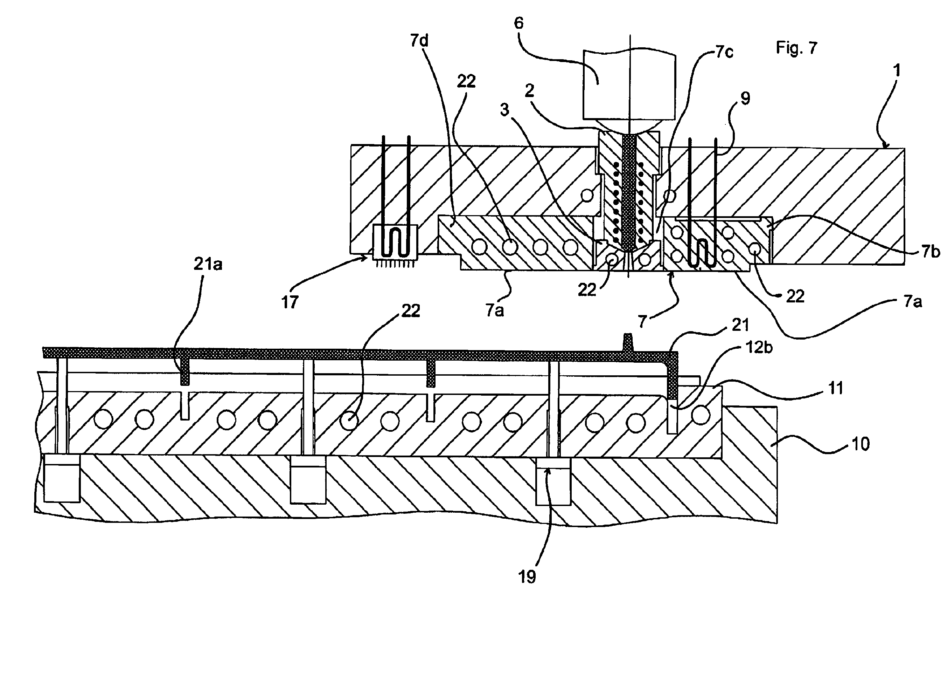

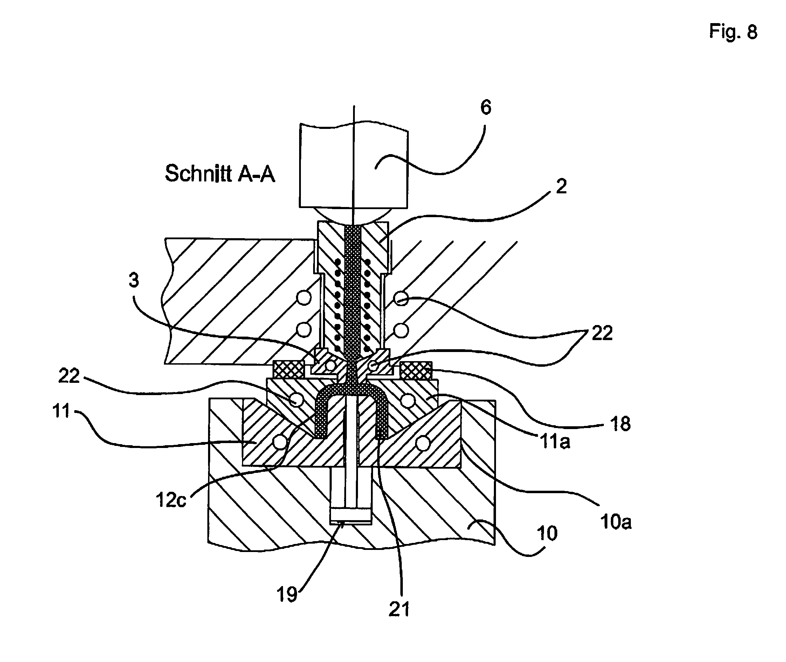

Zum unteren Formteil gehört ein profilierter Formeinsatz, welcher bei der dargestellten Ausführungsform einen in einer nicht dargestellten Formplatte oder dergleichen in Richtung seiner Längserstreckung verschiebbar gelagerten, langgestreckten Schlitten 10 aufweist, welcher mit einer in seiner Längserstreckung verlaufenden Ausnehmung 10a versehen ist, in welcher ein ebenfalls langgestreckter Schlitteneinsatz 11 positioniert ist. Der Schlitteneinsatz 11 bestimmt die geometrische Form des zu bildenden Profils bzw. der zu bildenden Leiste 21 und begrenzt zu Beginn des Einspritzvorganges gemeinsam mit dem Schlitten 10, dem Temperierelement 7 und dem Angusseinsatz 3 den geschlossenen Endabschnitt 4a der Formkavität 4. Über den Endabschnitt 4a hinaus bildet der Schlitteneinsatz 11 mit dem Schlitten 10 den nach oben offenen Längsabschnitt 4b. Wie Fig. 1, Fig. 7 und Fig. 8 zeigen, wird bei der dargestellten Ausführung durch die Auslegung der Geometrie der einzelnen Bauteile, insbesondere des Schlitteneinsatzes 11 und des Schlittens 10, ein Profil oder eine Leiste bestimmter Geometrie, beispielsweise eine gerade, lange Leiste mit Endkappen und einem U-förmigen Querschnitt, gebildet. Vertiefungen 12a (Fig. 1) und 12b (Fig. 5) an den Endabschnitten des Schlitteneinsatzes 11 sind zum Ausbilden der Endkappen vorgesehen und verbinden L-förmige Hohlräume 12c (Fig. 8), welche zwischen dem Schlitten 10 und dem Einsatz 11 gebildet sind und welche die Schenkel des Profils bzw. der Leiste 21 ausformen. Weitere Vertiefungen 12d lassen Querverstrebungen 21a im Profil bzw. in der Leiste 21 entstehen. Wie Fig. 8 zeigt sind im Schlitteneinsatz 11 Backen 11 a eingebaut, welche durch den Schließdruck in Position gehalten werden, wodurch die Kavität zur Aufnahme des Forminnendrucks beim Einspritzen geometrisch fixiert wird. Alternativ dazu kann auch eine Ausführung gewählt werden, bei der die Backen 11a nicht mittels des Schließdrucks über die Gleitelemente 18 fixiert werden, sondern eine Verriegelung der Backen 11a im Schlitteneinsatz 11 erfolgt. Diese Verriegelung kann dem Stand der Technik entsprechend mit mechanischen, hydraulischen und pneumatischen Verriegelungselementen ausgeführt werden. Eine solche Verriegelung der Backen 11a im Schlitteneinsatz 11 ist insbesondere dann sinnvoll und erforderlich, wenn die Form für das erfindungsgemäße Verfahren als Extrusionswerkzeug zum Betrieb mit einem Extruder vorgesehen ist.

Vor dem Temperierelement 7 ist bei der dargestellten Ausführung im Formeinsatz 1 eine Nachbehandlungseinheit 17 eingebaut. Wie Fig. 8 zeigt sind zwischen dem Schlitteneinsatz 11 und dem Formeinsatz 1 Gleitelemente 18 wirksam, die eine Relativbewegung zwischen dem Schlitteneinsatz 11 und dem Formeinsatz 1 auch unter der Wirkung des Schließdruckes ermöglichen. Die Gleitelemente 18 können als massive Elemente, mit oder ohne besonderer Beschichtung, als Kugellager, Rollenlager, Nadellager und dergleichen ausgeführt sein.

Im Formeinsatz 1, dem Temperierelement 7, dem Angusseinsatz 3 sowie dem Schlitteneinsatz 11 sind jeweils mehrere Bohrungen 22 vorgesehen, die zum Durchleiten eines temperierenden Mediums, insbesondere eines Kühlmediums vorgesehen sind.

Zur Bewegung des Schlittens 10 in Richtung des Pfeiles P in Fig. 1 kann ein nicht gezeigten Linearantrieb vorgesehen sein, welcher in bekannter Weise, beispielsweise elektrisch, mechanisch, pneumatisch oder hydraulisch, betätigbar sein kann.

Das Temperierelement 7 ist für die Qualität der mit ihm in Kontakt kommenden Oberfläche des fertigen Profils bzw. der zu fertigen Leiste 21 von besonderer Bedeutung. Der beheizbare Teil 7b des Temperierelementes 7 hinter dem Angusseinsatz 3 ermöglicht es, während des Spritzgießvorganges die Formmasse auf einer Temperatur knapp unter der Einspritztemperatur zu halten. Von besonderem Vorteil ist es, den Teil 7b des Temperierelementes 7 während des Spritzgießprozesses variabel temperieren zu können. Der Teil 7d des Temperierelementes 7, welcher sich vor dem Angusseinsatz 3 befindet, kann relativ kühl gehalten werden.

Fig. 1 zeigt die bereits geschlossene Form unmittelbar vor dem Beginn eines Spritzvorganges. Der Schlitten 10 mit dem Schlitteneinsatz 11 befindet sich in seiner Ausgangsposition, die Angussstelle nahe dem vorderen Ende der Formkavität 4.

Der Schlitten 10, der Schlitteneinsatz 11, das Temperierelement 7 und der Angusseinsatz 3 begrenzen den geschlossenen Endabschnitt 4a der Formkavität 4.

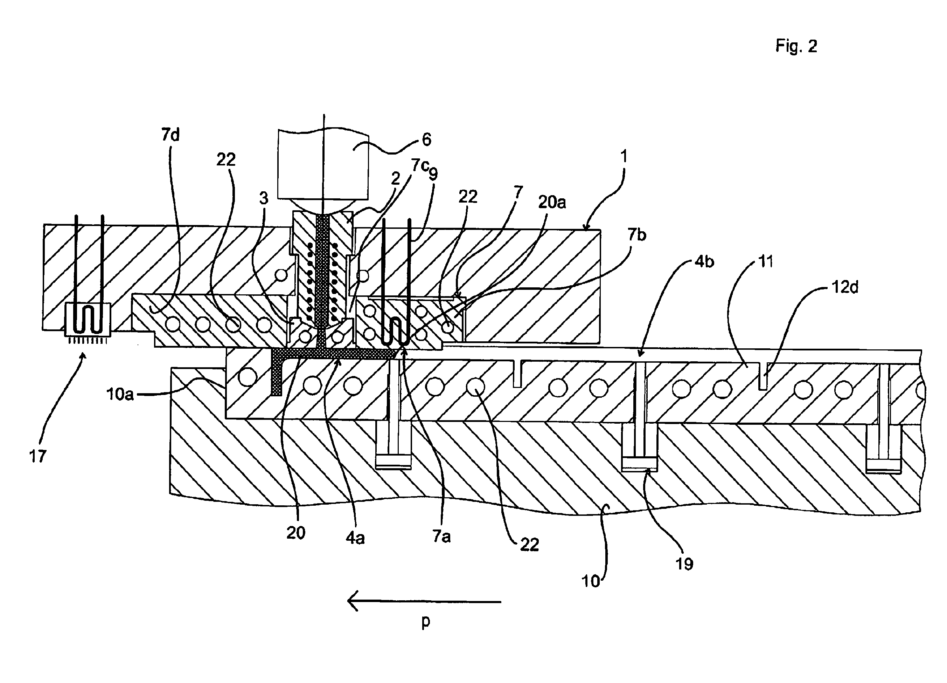

Fig. 2 zeigt den Beginn des Spritzvorganges. Das Aggregat 6 ist an der Heißkanaldüse 2 angesetzt und es ist bereits plastifizierte Formmasse 20 in den Abschnitt 4a eingespritzt worden. Der Angusseinsatz 3 ist derart temperiert, dass ein Erstarren der Formmasse 20 während des Füllvorganges verhindert wird.

Vorerst wird der Abschnitt 4a komplett aufgefüllt, wobei schließlich die Formmasse 20 bis zum beheizten Teil 7b des Temperierelementes 7 vordringt. Dabei baut die Formmasse 20 einen gewissen Gegendruck zum Einspritzdruck auf. Der Einspritzdruck wird derart eingestellt, dass sich beim Teil 7b des Temperierelementes 7 eine freie Schmelzfront 20a bildet, welche in und gegen die Verschieberichtung des Schlittens 10 nicht über die Erstreckung des Temperierelementes 7 hinaus fortschreiten kann. Nun wird die Verschiebebewegung des Schlittens 10 in Richtung des Pfeiles P (Fig. 1 bis Fig. 5) in Gang gesetzt.

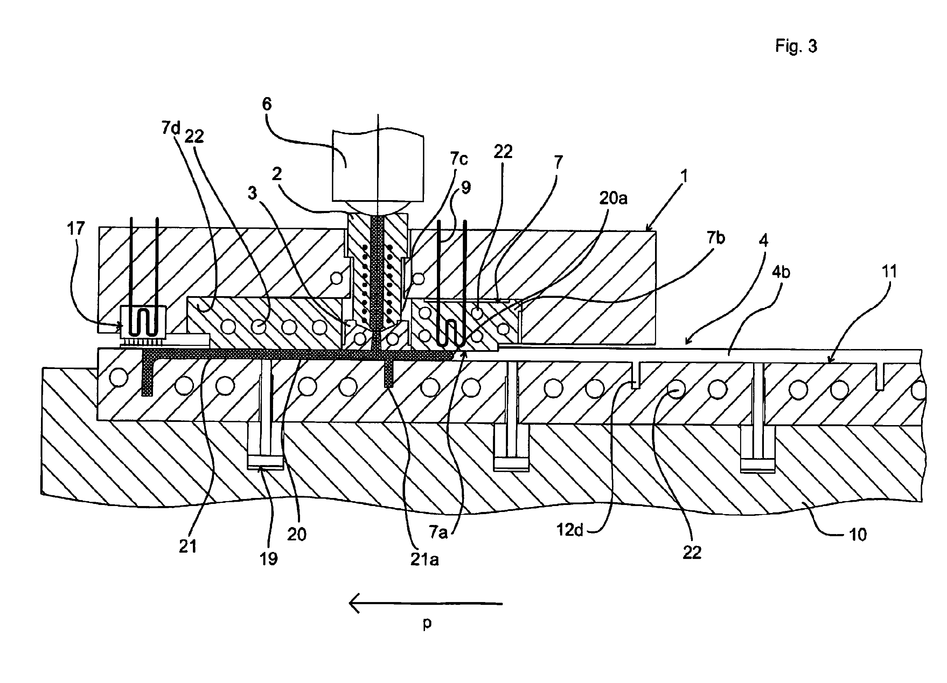

Fig. 3 zeigt ein nächstes Stadium während des kontinuierlich erfolgenden Einspritzens der Formmasse 20. Das während der Verschiebebewegung des Schlittens 10 frei werdende Volumen in der Kavität 4 wird stetig von der nachströmenden Masse 20 gefüllt. Der Prozessdruck wird konstant gehalten, wodurch die Position der Schmelzefront 20a unterhalb des beheizten Teiles 7b des Temperierelementes 7 zumindest im Wesentlichen konstant bleibt. Dadurch stellt sich ein "pseudostatischer" Füllzustand in der Form ein.

Wie bereits erwähnt wird die Temperatur im Temperierelement 7 auf einem Niveau gehalten, welches die Formmasse 20 auf Schmelzetemperatur hält, um ein Erstarren während des Füllvorganges zu verhindern. Die vom Schlitten 10 von der Angussstelle weg bewegte Formmasse 20 tritt aus dem geschlossenen Abschnitt 4a heraus und wird im gekühlten Teil 7d des Temperierelementes 7 gekühlt. Das bzw. die mit dem Schlitten 10 aus der Form kontinuierlich austretende Profil bzw. Leiste 21 wird von der Nachbehandlungseinheit 17 an der freien Oberfläche nachbehandelt, um die erwünschte Qualität der Oberfläche des gebildeten Profils bzw. der gebildeten Leiste 21 zu gewährleisten. Die Nachbehandlung kann eine Behandlung mit Infrarotstrahlung, mit Ultraschall, durch Beflammen, mit Laser und dergleichen umfassen. Es ist auch eine mechanische Nachbearbeitung durch Abhobeln, Schleifen oder Fräsen möglich. Dabei ist es möglich, die Oberfläche des gebildeten Profils bzw. der gebildeten Leiste 21 nicht nur zu glätten sondern auch zu strukturieren oder, falls erforderlich, zu entgraten.

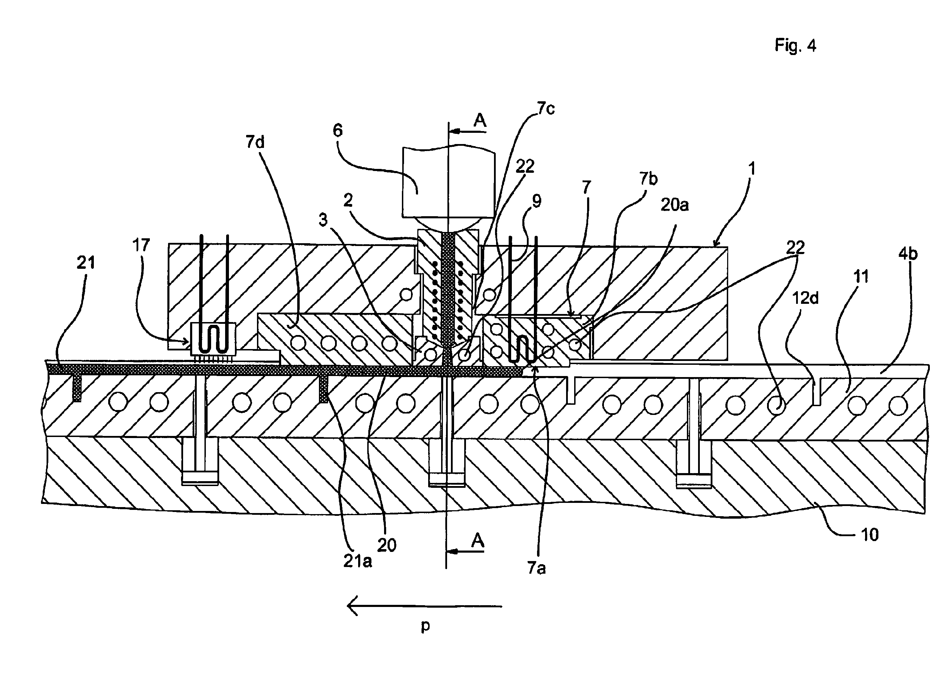

Fig. 4 zeigt das weitere Fortschreiten der Herstellung des Profils bzw. der Leiste 21. Wird zum Ausbilden der Verstrebungen 21 a im Profil bzw. in der Leiste 21 örtlich mehr Formmasse benötigt, wird der Prozessdruck über eine Regelung des Einspritzvorganges entsprechend erhöht. Die Regelung bzw. Steuerung der Relativbewegung des Schlittens 10 zum Formeinsatz wird von der Maschinenregelung vorgenommen. Dabei werden die für den Prozess relevanten Einspritzparameter (Drücke, Temperaturen, Zeiten, Wege) in Abhängigkeit von der Relativbewegung geregelt bzw. gesteuert.

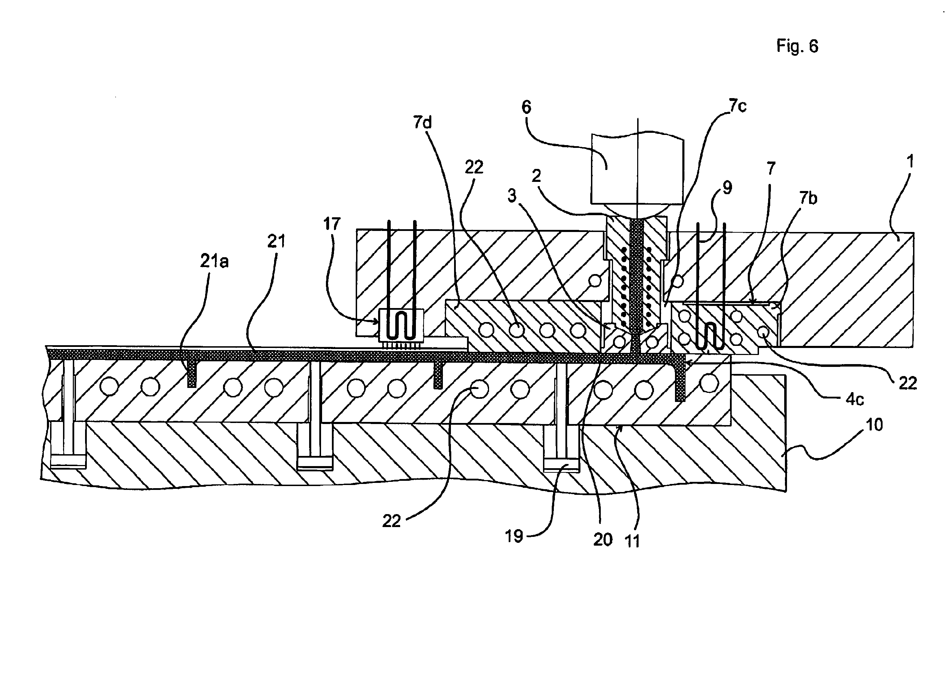

Fig. 5 zeigt ein Stadium während des Bildens des Profils bzw. der Leiste 21 knapp vor dem Erreichen des zweiten Endes der Kavität 4. Fig. 6 zeigt die letzte Phase des Befüllens der Kavität 4 durch Auffüllen der Vertiefung 12b im Schlitteneinsatz 11, wodurch die zweite Endkappe des Profils bzw. der Leiste 21 gebildet wird. Wie beim herkömmlichen Spritzgießverfahren wird über eine definierte Zeit ein Nachdruck aufrecht gehalten, um die Ausprägung der Profil- bzw. Leistengeometrie an diesem Ende zu gewährleisten. Das Temperierelement 7 wird gekühlt, um ein Erstarren des Bauteils zu unterstützen bzw. sicherzustellen.

Anschließend wird das Profil bzw. die Leiste 21 über eine bestimmte Zeitdauer im Schlitteneinsatz 11 abgekühlt, um seine bzw. ihre Erstarrung zu gewährleisten. Die Form wird geöffnet und das Profil bzw. die Leiste 21 wie bei herkömmlichen Spritzgießformen mittels Auswerfer 19 ausgeworfen.

Bei der in den Figuren gezeigten Ausführungsform wird der Schlitten 10 relativ zum Formeinsatz 1 bewegt. Es ist auch möglich, den profilierten Formeinsatz an einem feststehenden Formteil anzuordnen und den düsenseitigen Formeinsatz 1 mit dem Aggregat 6 gegenüber dem profilierten Formeinsatz zu verschieben. Schlitten und Schlitteneinsatz können einen einzigen Bauteil bilden, wobei eine Ausführung mit einem Schlitteneinsatz den Vorteil der Austauschbarkeit des Einsatzes mit sich bringt. Der Schlitten kann geteilt bzw. mehrteilig ausgeführt sein, wobei Schlittenteile sowohl auf dem oberen als auch auf dem unteren Formteil angeordnet werden können. Die Ausführung der einzelnen Formteile kann auch derart erfolgen, dass keine linear geradlinige Bewegung stattfindet, sondern dass der düsenseitige Formeinsatz entlang einer räumlichen Kurve bewegt wird, um derart gleichmäßig oder ungleichmäßig gekrümmte Profile bzw. Leisten herzustellen. Möglich und wirtschaftlich von Vorteil ist auch ein Einspritzen in den profilierten Formeinsatz während eines Vor- und Rückbewegens des Schlittens. Damit können die Trockenzeiten und daher die Zykluszeiten verkürzt werden. Ein Einspritzen in mehrere nachgeschaltete bzw. parallel geschaltete Kavitäten ist ebenfalls möglich.

Das Aggregat 6 kann mit einem oder mehreren Spritzzylinder(n) versehen sein, welche in Serie oder parallel angeordnet sind. Bei einer Anordnung in Serie können unterschiedliche Materialien zur Herstellung von Mehrkomponententeilen, oder übereinstimmende Materialien - zur Erhöhung des Schussvolumens - verspritzt werden. Eine besonders vorteilhafte Betriebsweise besteht in der Verwendung von zwei oder drei alternierend oder zyklisch arbeitenden Spritzzylindern. Dabei wird jeweils aus einem Zylinder die Schmelze in eine Form eingespritzt und im anderen Zylinder das Spritzmaterial plastifiziert. Bei ungleichen Spritz- und Dosierzeiten können drei Zylinder Vorteile bringen, wobei beim Vorsehen mehrerer Zylinder über eine Düse mit Schaltventil die Schmelzeströme zusammengeführt werden. Die Regelung des Einspritzvorganges erfolgt vorzugsweise über den Einspritzdruck, auch Zeit- und/oder Wegregelungen sind möglich. Mit einer alternierenden Betriebsweise der Aggregate können sehr lange Profile bzw. Leisten mit großem Schussvolumen mittels kleiner Spritzaggregate hergestellt werden. Da in Folge geringer Schließkräfte die Maschinen sehr klein gebaut sein können, bieten sich auch kleine Aggregate für erfindungsgemäße Spritzgießanlagen an.

Die rheologische Auslegung des Verfahrens bzw. der Form erfolgt bevorzugt mit Simulationsprogrammen. Diese können weiterentwickelte Softwareprogramme auf Basis jener Programme sein, die derzeit für die Prozesssimulation im Spritzguss eingesetzt werden. Die Entwicklung besonderer Programmmodule für die Simulation des erfindungsgemäßen Prozesses ist von Vorteil.

Analog zu dem aus der WO 2006/045720 bekannten Verfahren und der von hier bekannten Form kann auch ein gesonderter Kern vorgesehen sein, um spezielle Bauteilgeometrien herstellen zu können.

Als Formmasse im Rahmen des erfindungsgemäßen Verfahrens kommt vor allem ein Thermoplast in Frage, welcher als flüssige Schmelze unter zeitlich definierter Einwirkung von Druck und Temperatur in die Form eingespritzt wird und durch Abkühlen in der Form erstarrt. Die Formmasse kann auch eine reaktive Flüssigkeit, beispielsweise ein Duroplast oder ein Elastomer sein, die in analoger Weise wie eine Thermoplastschmelze in die Form eingespritzt werden, jedoch durch Reaktion erstarren. Thermoplastischen Formmassen können mit Fasern, beispielsweise Glasfasern, verstärkt sein. Der Verfahrensdruck beim Einspritzen kann den beim Spritzguss üblichen Werten entsprechen. Bei der Herstellung von Profilen und Leisten mit dem erfindungsgemäßen Verfahren können auch Einlegeteile aus anderen Werkstoffen, beispielsweise Glas, Metalle, Verbundstoffe und Hölzer, zur Herstellung von Hybridbauteilen zum Einsatz kommen. Dabei werden diese Einlegeteile beim kontinuierlichen Einspritzen der Formmasse in die Kavität umgespritzt und gehen mit der erstarrten Formmasse eine formschlüssige Verbindung ein. Durch das Einlegen von Folien, Stoffen und Furnieren in die Kavität können Formteile mit dekorierter Oberfläche mit dem erfindungsgemäßen Verfahren hergestellt werden.

### BEZUGSZEICHENLISTE

- 1: Formeinsatz
- 2: Heißkanaldüse
- 3: Angusseinsatz
- 3a: Außenseite
- 4: Formnest
- 4a: geschlossener Endabschnitt
- 4b: offener Längsabschnitt
- 4c: geschlossener Endabschnitt
- 5: Ausnehmung
- 6: Aggregat
- 7: Temperierelement
- 7a: Außenseite
- 7b: beheizter Teil
- 7c: Öffnung
- 7d: gekühlter Teil
- 9: Heizelement
- 10: Schlitten
- 10a: Ausnehmung
- 11: Schlitteneinsatz
- 10a: Backen
- 12a: Vertiefung
- 12b: Vertiefung
- 12c: Hohlraum
- 12d: Vertiefung
- 17: Nachbehandlungseinheit
- 18: Gleitelement
- 19: Auswerfer
- 20: Formmasse
- 20a: Schmelzefront
- 21: Profil
- 21a: Verstrebung
- 22: Bohrung

## Patentansprüche

1. Verfahren zum Herstellen langgestreckter Profile oder Leisten (21) aus erstarrenden Formmassen in einer Form mit mindestens einem unteren und mindestens einem oberen Formteil, unter kontinuierlichem Einspritzen von Formmasse (20) in eine Kavität (4), wobei eingespritzte Formmasse (20) unter fortschreitender kontinuierlicher Verlängerung des gebildeten Profils bzw. der gebildeten Leiste (21), durch eine Relativbewegung von Formkomponenten von der bzw. den Angussstelle(n) weg- und aus der Form heraustransportiert wird, und wobei Formmasse (20) solange eingespritzt wird, bis das Profil bzw. die Leiste (21) seine bzw. ihre vorgesehene Länge erreicht hat,
**dadurch gekennzeichnet,**
**dass** zu Beginn des Einspritzens die Formmasse (20) einen in der Austrittsrichtung des zu bildenden Profils bzw. der zu bildenden Leiste (21) geschlossenen Endabschnitt (4a) der Formkavität (4) bis hinter die Angussstelle (3) auffüllt, wobei hinter der Angussstelle (3) der Frontabschnitt der Formmasse (20) während der Relativbewegung von Formkomponenten durch den Prozessdruck als freier Frontabschnitt (20a) gegenüber dem oberen Formteil positioniert bleibt, wobei die Formkavität (4) aufgefüllt wird während die Formmasse (20) von der Angussstelle (3) weg- und aus der Form heraustransportiert wird.

2. Verfahren nach Anspruch 1, **dadurch gekennzeichnet, dass** der freie Frontabschnitt (20a) der eingefüllten Formmasse (20) gesondert temperiert wird.

3. Verfahren nach Anspruch 1 oder 2, **dadurch gekennzeichnet, dass** der freie Frontabschnitt (20a) der eingefüllten Formmasse (20) konstant temperiert wird.

4. Verfahren nach Anspruch 1 oder 2, **dadurch gekennzeichnet, dass** der freie Frontabschnitt der eingefüllten Formmasse (20) variabel temperiert wird.

5. Form zum Herstellen langgestreckter Profile oder Leisten (21) aus erstarrenden Formmassen (20), mit zumindest einem oberen Formteil und zumindest einem unteren Formteil, wobei an dem einen Formteil zumindest ein Angusseinsatz (3) und an dem anderen ein profilierter Formeinsatz (10, 11) angeordnet ist, welcher die Geometrie des Profils oder der Leiste (21) zumindest weitgehend bestimmt und die Formkavität (4) mitbildet, wobei der profilierte Formeinsatz und der den Angusseinsatz (3) aufweisende Formteil in der Längserstreckung der Formkavität (4) zueinander in Relativbewegung versetzbar sind, derart, dass durch die Bewegung das Profil bzw. die Leiste (21) inner- und außerhalb der Form in der vorgesehenen Länge herstellbar ist,
**dadurch gekennzeichnet,**
**dass** der profilierte Formeinsatz (10, 11) eine der Länge des herzustellenden Profils bzw. der herzustellenden Leiste (21) entsprechende Kavität (4) aufweist und gemeinsam mit dem den Angusseinsatz (3) aufweisenden Formteil lediglich zu Beginn und am Ende des Spritzvorganges geschlossene Kavitätsendabschnitte bildet.

6. Form nach Anspruch 5, **dadurch gekennzeichnet, dass** in dem den Angusseinsatz (3) aufweisenden Formteil ein Temperierelement (7) eingesetzt ist, welches mit der Oberfläche der eingespritzten Formmasse (20) in Kontakt tritt.

7. Form nach Anspruch 6, **dadurch gekennzeichnet, dass** das Temperierelement (7) zumindest vor der Angussstelle kühlbar ist.

8. Form nach Anspruch 6, **dadurch gekennzeichnet, dass** das Temperierelement (7) hinter der Angussstelle variabel temperierbar ist.

9. Form nach einem der Ansprüche 5 bis 8, **dadurch gekennzeichnet, dass** der profilierte Formeinsatz (10, 11) einen verschiebbar gelagerten, mit einem profilierten Einsatz (11) versehenen Schlitten (10) aufweist, welcher ein- oder mehrteilig ausgeführt ist.

10. Form nach Anspruch 5, **dadurch gekennzeichnet, dass** eine Nachbehandlungseinheit (17) zur Behandlung, insbesondere Glättung, der freien Oberfläche des aus der Form austretenden Profils bzw. der aus der Form austretenden Leiste (21) vorgesehen ist.

11. Form nach Anspruch 10, **dadurch gekennzeichnet, dass** die Nachbehandlung mit Infrarotstrahlung, mit Ultraschall, durch Beflammen oder durch mechanisches Nachbearbeiten durchgeführt wird.

## Claims

1. A method for producing elongated profiles or strips (21) from hardened moulding compounds in a mould with at least one lower and at least one upper mould part, with continuous injection of moulding compound (20) into a cavity (4), wherein, as the continuous lengthening of the formed profile or the formed strip (21) progresses, injected moulding compound (20) is transported away from the feed point or points and out of the mould by a relative movement of moulding components, and wherein moulding compound (20) is injected until the profile or the strip (21) has reached its intended length,
**characterised in that**,
at the beginning of the injection, the moulding compound (20) fills an end portion (4a) of the mould cavity (4) that is closed in the exiting direction of the profile or strip (21) to be formed, up to behind the feed point (3), wherein, behind the feed point (3), the front portion of the moulding compound (20) remains positioned as a free front portion (20a) with respect to the upper mould part during the relative movement of the mould components as a result of the process pressure, wherein the mould cavity (4) is filled while the moulding compound (20) is being transported away from the feed point (3) and out of the mould.

2. The method according to claim 1, **characterised in that** the free front portion (20a) of the filled moulding compound (20) is temperature-regulated separately.

3. The method according to claim 1 or 2, **characterised in that** the free front portion (20a) of the filled moulding compound (20) is temperature-regulated constant.

4. The method according to claim 1 or 2, **characterised in that** the free front portion of the filled moulding compound (20) is temperature-regulated variably.

5. A mould for producing elongated profiles or strips (21) from hardened moulding compounds (20), with at least one upper mould part and at least one lower mould part, wherein at least one feed insert (3) is disposed on the one mould part and a profiled mould insert (10, 11) is disposed on the other mould part, said profiled mould insert at least for the most part determining the geometry of the profile or the strip (21) and jointly forming the mould cavity (4), wherein the profiled mould insert and the mould part comprising the feed insert (3) can be displaced in the longitudinal extension of the mould cavity (4) in a relative movement with respect to one another, in such a way that, as a result of the movement, the profile or the strip (21) can be produced inside and outside the mould in the intended length,
**characterised in that**
the profiled mould insert (10, 11) comprises a cavity (4) corresponding to the length of the profile or the strip (21) to be produced and, together with the mould part comprising the feed insert (3), forms closed cavity end portions only at the start and at the end of the injection process.

6. The mould according to claim 5, **characterised in that** a temperature-regulating element (7), which comes into contact with the surface of the injected moulding compound (20), is inserted in the mould part comprising the feed insert (3).

7. The mould according to claim 6, **characterised in that** the temperature-regulating element (7) can be cooled at least in front of the feed point.

8. The mould according to claim 6, **characterised in that** the temperature-regulating element (7) can be temperature-regulated variably behind the feed point.

9. The mould according to any one of claims 5 to 8, **characterised in that** the profiled mould insert (10, 11) comprises a displaceably mounted carriage (10) which is provided with a profiled insert (11) and which is constituted single-part or multipart.

10. The mould according to claim 5, **characterised in that** a post-treatment unit (17) is provided for the treatment, in particular smoothing, of the free surface of the profile or the strip (21) exiting from the mould.

11. The mould according to claim 10, **characterised in that** the post-treatment is carried out with infrared radiation, with ultrasound, by flame treatment or by mechanical reworking.

## Revendications

1. Procédé de production de profilés allongés ou de baguettes (21) à partir de matières moulables se solidifiant, dans un moule comprenant au moins une partie inférieure de moule et au moins une partie supérieure de moule, par l'injection en continu d'une matière moulable (20) dans une cavité (4), sachant que la matière moulable (20) injectée est transportée loin du/des point(s) d'injection et hors du moule par un mouvement relatif des composants du moule, au fur et à mesure de l'allongement croissant continu du profilé formé, respectivement de la baguette formée (21), et sachant que la matière moulable (20) est injectée jusqu'à ce que le profilé, respectivement la baguette (21), ait atteint la longueur prévue,
**caractérisé en ce**
**qu'**au début de l'injection, la matière moulable (20) remplit une section d'extrémité (4a) de la cavité de moule (4), fermée dans la direction de sortie du profilé respectivement de la baguette (21) à former, jusque derrière le point d'injection (3), sachant que derrière le point d'injection (3), la section avant de la matière moulable (20) conserve sa position en tant que section avant libre (20a) par rapport à la partie supérieure de moule pendant le mouvement relatif des composants du moule sous l'effet de la pression de travail, sachant que la cavité de moule (4) est remplie pendant que la matière moulable (20) est transportée loin du point d'injection (3) et hors du moule.

2. Procédé selon la revendication 1, **caractérisé en ce que** la section avant libre (20a) de la matière moulable (20) introduite est équilibrée en température de manière séparée.

3. Procédé selon la revendication 1 ou 2, **caractérisé en ce que** la section avant libre (20a) de la matière moulable (20) introduite est équilibrée en température de manière constante.

4. Procédé selon la revendication 1 ou 2, **caractérisé en ce que** la section avant libre (20a) de la matière moulable (20) introduite est équilibrée en température de manière variable.

5. Moule destiné à la production de profilés allongés ou de baguettes (21) à partir de matières moulables (20) se solidifiant, comprenant au moins une partie supérieure de moule et au moins une partie inférieure de moule, sachant que sur l'une moitié de moule, au moins un insert d'injection (3) est disposé et sur l'autre, une partie amovible de moule profilée (10, 11) est disposée, laquelle détermine au moins dans une large mesure la géométrie du profilé ou de la baguette (21) et participe à la formation de la cavité du moule (4), sachant que la partie amovible de moule profilée et la partie de moule présentant l'insert d'injection (3) peuvent être changées de place l'une par rapport à l'autre dans l'étirement longitudinal de la cavité de moule (4) dans un mouvement relatif, de telle sorte que, de par le mouvement, le profilé ou la baguette (21) peut être fabriqué(e) dans la longueur prévue dans et hors du moule,
**caractérisé en ce que** la partie amovible de moule profilée (10, 11) présente une cavité (4) correspondant à la longueur du profilé ou de la baguette (21) à fabriquer et forme conjointement avec la partie de moule présentant l'insert d'injection (3), uniquement au début et en fin de la procédure d'injection, des sections d'extrémité de cavité fermées.

6. Moule selon la revendication 5, **caractérisé en ce que** dans la partie de moule présentant l'insert d'injection (3), un élément d'équilibrage en température (7) est inséré, lequel entre en contact avec la surface de la matière moulable (20) injectée.

7. Moule selon la revendication 6, **caractérisé en ce que** l'élément d'équilibrage en température (7) peut être refroidi au moins avant le point d'injection.

8. Moule selon la revendication 6, **caractérisé en ce que** l'élément d'équilibrage en température (7) peut être équilibré en température de manière variable après le point d'injection.

9. Moule selon l'une des revendications 5 à 8, **caractérisé en ce que** la partie amovible de moule profilée (10, 11) présente un rail (10) disposé de manière à pouvoir se déplacer, doté d'un insert profilé (11), lequel rail est formé d'une ou de plusieurs pièce(s).

10. Moule selon la revendication 5, **caractérisé en ce qu'**une unité de post-traitement (17) est prévue pour traiter, en particulier lisser, la surface libre du profilé, respectivement de la baguette (21), sortant du moule.

11. Moule selon la revendication 10, **caractérisé en ce que** le post-traitement est effectué par rayonnement infrarouge, aux ultra-sons, à la flamme ou par un post-traitement mécanique.
